# EUROPÄISCHE PATENTSCHRIFT

(11) **EP 3 810 818 B1**
(45) Veröffentlichungstag und Bekanntmachung des Hinweises auf die Patenterteilung: **28.09.2022**
(21) Anmeldenummer: 19735225.5
(22) Anmeldetag: 19.06.2019
(51) Int. Cl.: C22C 21/02, C22C 21/04

(54) **ALUMINIUMLEGIERUNG, VERFAHREN ZUR HERSTELLUNG EINES MOTORBAUTEILS, MOTORBAUTEIL UND VERWENDUNG EINER ALUMINIUMLEGIERUNG ZUR HERSTELLUNG EINES MOTORBAUTEILS**
ALUMINUM ALLOY, METHOD FOR PRODUCING AN ENGINE COMPONENT, ENGINE COMPONENT, AND USE OF AN ALUMINUM ALLOY TO PRODUCE AN ENGINE COMPONENT
ALLIAGE D'ALUMINIUM, PROCÉDÉ DE FABRICATION D'UN ÉLÉMENT DU MOTEUR, ÉLÉMENT DU MOTEUR ET UTILISATION D'UN ALLIAGE D'ALUMINIUM POUR LA FABRICATION D'UN ÉLÉMENT DU MOTEUR

(30) Priorität: 20.06.2018 DE 102018210007
(43) Veröffentlichungstag der Anmeldung: 28.04.2021
(73) Patentinhaber: Federal-Mogul Nürnberg GmbH, 90441 Nürnberg (DE)
(72) Erfinder: WILLARD, Robert, 90461 Nürnberg (DE); SOBOTA, Isabella, 90427 Nürnberg (DE); JÄGER, Rolf, 84076 Pfeffenhausen (DE); KOCH, Philipp, 90459 Nürnberg (DE); KIRSTE, Thomas, 90559 Burgthann (DE); YOUNG, Sophia, 90542 Eckental (DE); MORGENSTERN, Roman, 91560 Heilsbronn (DE); POPP, Martin, 90473 Nürnberg (DE)
(74) Vertreter: Hoffmann Eitle
(86) Internationale Anmeldenummer: PCT/EP2019/066174
(87) Internationale Veröffentlichungsnummer: WO 2019/243411

(56) Entgegenhaltungen:
- EP-A2- 1 876 251
- FR-A1- 2 210 669
- JP-A- H01 108 339
- JP-A- 2015 086 445
- PRATHEESH K ET AL: "Study on the Effects of Squeeze Pressure on Mechanical Properties and Wear Characteristics of Near Eutectic Al-Si-Cu-Mg-Ni Piston Alloy with Variable Mg Content", TRANSACTIONS OF THE INDIAN INSTITUTE OF METALS, SPRINGER INDIA, IN, Bd. 68, Nr. 1, 14. Juli 2015 (2015-07-14), Seiten 59-66, XP035520887, ISSN: 0972-2815, DOI: 10.1007/S12666-015-0607-8 [gefunden am 2015-07-14]

## Beschreibung

### TECHNISCHES GEBIET

Die vorliegende Erfindung betrifft eine Aluminiumlegierung, insbesondere eine Aluminium-Gusslegierung, ein Verfahren zur Herstellung eines Motorbauteils, insbesondere eines Kolbens für einen Verbrennungsmotor, bei dem eine Aluminiumlegierung im Schwerkraftkokillengussverfahren abgegossen wird, ein Motorbauteil, das zumindest teilweise aus einer Aluminiumlegierung besteht, und die Verwendung einer Aluminiumlegierung zur Herstellung eines solchen Motorbauteils.

### STAND DER TECHNIK

In den letzten Jahren wurden zunehmend Forderungen nach besonders ökonomischen und damit ökologischen Transportmitteln laut, die hohen Verbrauchs- und Emissionsanforderungen gerecht werden müssen. Zudem besteht seit jeher das Bedürfnis, Motoren möglichst leistungsfähig und verbrauchsarm zu gestalten. Ein entscheidender Faktor bei der Entwicklung von leistungsfähigen und emissionsarmen Verbrennungsmotoren sind Kolben, die bei immer höheren Verbrennungstemperaturen und Verbrennungsdrücken eingesetzt werden können, was im Wesentlichen durch immer leistungsfähigere Kolbenwerkstoffe ermöglicht wird. Dies bedeutet, dass dem Kolbenmaterial und der Entwicklung immer leistungsfähigerer Werkstoffe für Kolben entscheidende Bedeutung zukommt.

Grundsätzlich muss ein Kolben für einen Verbrennungsmotor eine hohe Warmfestigkeit aufweisen und dabei gleichzeitig möglichst leicht und fest sein. Eine Gewichtseinsparung beim Kolben unter Beibehaltung oder sogar noch Verbesserung der Kolbeneigenschaften ist besonders erwünscht. Dabei ist es von besonderer Bedeutung, wie die mikrostrukturelle Verteilung, Morphologie, Zusammensetzung und thermische Stabilität höchstwarmfester Phasen ausgebildet sind. Eine diesbezügliche Optimierung berücksichtigt üblicherweise einen minimalen Gehalt an Poren und oxidischen Einschlüssen.

Der gesuchte, vorteilhafte Kolbenwerkstoff muss sowohl hinsichtlich isothermer Schwingfestigkeit ("High Cycle Fatigue" HCF) als auch hinsichtlich thermomechanischer Ermüdungsfestigkeit ("Thermo Mechanical Fatigue" TMF) optimiert sein. Um die TMF-Eigenschaften möglichst optimal auszugestalten ist stets eine möglichst feine Mikrostruktur des Werkstoffs anzustreben. Eine feine Mikrostruktur reduziert die Gefahr des Entstehens von Mikroplastizität bzw. von Mikrorissen an relativ großen primären Phasen (insbesondere an primären Siliziumausscheidungen) und damit auch die Gefahr von Rissinitiierung und -ausbreitung.

Unter TMF-Beanspruchung treten an relativ großen primären Phasen, insbesondere an primären Siliziumausscheidungen, aufgrund unterschiedlicher Ausdehnungskoeffizienten der einzelnen Bestandteile der Legierung, nämlich der Matrix und der primären Phasen, Mikroplastizitäten bzw. Mikrorisse auf, welche die Lebensdauer des Kolbenwerkstoffs erheblich senken können. Zur Erhöhung der TMF-HCF-Lebensdauer ist bekannt, die primären Phasen möglichst klein und fein zu halten.

Günstige mechanische Eigenschaften bei hohen Betriebstemperaturen weisen insbesondere hochlegierte naheutektische oder übereutektische Aluminium-Silizium-Legierungen auf. Dabei ist hinsichtlich des Primär-Siliziums und der entstehenden intermetallischen Phasen die Phasengröße zu begrenzen.

Die DE 10 2011 083 969 A1 offenbart in diesem Zusammenhang ein Verfahren zur Herstellung eines Motorbauteils, insbesondere eines Kolbens für einen Verbrennungsmotor, bei dem eine Aluminiumlegierung im Schwerkraftkokillengussverfahren abgegossen wird. Dabei weist die Aluminiumlegierung die folgenden Legierungselemente auf: Silizium: 6 Gew.-% bis 10 Gew.-%, Nickel: 1,2 Gew.-% bis 2 Gew.-%, Kupfer: 8 Gew.-% bis 10 Gew.-%, Magnesium: 0,5 Gew.-% bis 1,5 Gew.-%, Eisen: 0,1 Gew.-% bis 0,7 Gew.-%, Mangan: 0,1 Gew.-% bis 0,4 Gew.-%, Zirkonium: 0,2 Gew.-% bis 0,4 Gew.-%, Vanadium: 0,1 Gew.-% bis 0,3 Gew.-%, Titan: 0,1 Gew.-% bis 0,5 Gew.-%. Hier werden zur Herstellung der hochwarmfesten Legierung hohe Konzentrationen des kostspieligen Elementes Kupfer benötigt.

In ähnlicher Weise fordern konventionelle Aluminium-Gusslegierungen für thermisch hochbelastbare Motorbauteile üblicherweise zwischen 5 und 7 Gew.-% für die Summe der Legierungselemente Kupfer und Nickel als festigkeitssteigernde Legierungselemente sowie 11 bis 13 Gew.-% Silizium. Die Zugabe relative großer Mengen der teuren und schweren Elemente Kupfer und Nickel erhöht vor allem die Dichte des Kolbenwerkstoffes und damit das Gewicht des Kolbens. Im Lichte obiger Bestrebungen gilt es daher, einen Kompromiss aus Gewicht, Festigkeit und Kosten zu finden.

### DARSTELLUNG DER ERFINDUNG

Eine Aufgabe der vorliegenden Erfindung liegt daher darin, eine Aluminiumlegierung bereitzustellen, die sich im Schwerkraftkokillenguss abgießen lässt, eine geringe Dichte aufweist und trotzdem einen erhöhten Anteil fein verteilter, hochwarmfester, thermisch stabiler Phasen enthält.

Wie beim Druckguss gibt es auch beim Schwerkraftkokillenguss eine Konzentrationsobergrenze, bis zu der Legierungselemente eingebracht werden sollten und bei deren Überschreiten die Gießbarkeit der Legierung erschwert oder unmöglich gemacht wird. Darüber hinaus kommt es bei zu hohen Konzentrationen von festigkeitssteigernden Elementen zur Bildung großer plattenförmiger intermetallischer Phasen, die die Ermüdungsfestigkeit drastisch absenken. Dies wird in der vorliegenden Erfindung berücksichtigt.

Die Lösung dieser Aufgabe wird durch die Legierung nach Anspruch 1 erreicht. Bevorzugte Ausführungsformen der Legierung ergeben sich aus den diesbezüglichen Unteransprüchen.

Eine Aluminiumlegierung, insbesondere eine Aluminium-Gusslegierung, welche die Legierungselemente

| | |
|---|---|
| Silizium (Si): | 10,0 Gew.-% bis < 13,0 Gew.-%, |
| Nickel (Ni): | bis < 0,6 Gew.-%, |
| Kupfer (Cu): | 1,5 Gew.-% bis < 3,6 Gew.-%, |
| Magnesium (Mg): | 0,5 Gew.-% bis 1,5 Gew.-%, |
| Eisen (Fe): | 0,1 Gew.-% bis 0,7 Gew.-%, |
| Mangan (Mn): | 0,1 bis 0,4 Gew.-%, |
| Zirkonium (Zr): | > 0,1 bis < 0,3 Gew.-%, |
| Vanadium (V): | > 0,08 bis < 0,2 Gew.-%, |
| Titan (Ti): | 0,05 bis < 0,2 Gew.-%, |
| Phosphor (P): | 0,0025 bis 0,008 Gew.-%, |

sowie als Rest Aluminium und nicht zu vermeidende Verunreinigungen aufweist bzw. optional daraus besteht und damit ferner besonders günstige Eigenschaften hinsichtlich Warmfestigkeit aufweist und sich ob zum Stand der Technik reduzierter Dichte zur Herstellung gewichtsreduzierter und hoch belastbarer Kolben für Verbrennungsmotoren anbietet. Bevorzugt ist die erfindungsgemäße Aluminiumlegierung nickelfrei und enthält mithin keine nennenswerten Mengen an Nickel (Ni).

Die im Vergleich zum Stand der Technik deutlich verringerten Gehalte an Kupfer und Nickel erniedrigen einerseits in vorteilhafter Weise die Gesamtkosten der Legierungsherstellung, denn sie zählen zu den kostspieligsten Legierungselementen, so dass jede (teilweise) Substitution bzw. Gehaltsreduzierung der beiden Elemente erhebliche Kostenersparnisse einbringt. Andererseits wird dadurch die Dichte des Aluminiumwerkstoffes verringert. Die vorliegende Erfindung zeichnet sich dadurch aus, dass aufgrund der optimalen Abstimmung der Legierungselemente Magnesium, Eisen, Mangan, Zirkonium, Vanadium und Titan trotz deutlicher Verringerung der für hohe thermische Belastbarkeit sonst notwendigen Gehalte der Elemente Kupfer und Nickel dennoch eine gute und ausreichende Festigkeit gewährleistet wird. Der erfindungsgemäße Gehalt an Silizium dient dem Erreichen einer guten Gießbarkeit des Aluminiumwerkstoffes.

Obige erfindungsgemäße Legierung besteht bevorzugt aus den aufgelisteten Bestandteilen und enthält nur die aufgelisteten Bestandteile und sonst lediglich unvermeidbare Verunreinigungen d.h. Bestandteile in geringer Konzentration, die nicht bewusst als funktionale Bestandteile zugegeben worden sind. Die erfindungsgemäße Legierung ist dann bevorzugt frei von weiteren Elementen und insbesondere frei von Beryllium (Be) und/oder Calcium (Ca).

Ferner ist es bevorzugt, dass die erfindungsgemäße Aluminiumlegierung bzw. Aluminium-Gusslegierung 11,0 bis < 12,5 Silizium und/oder 1,8 bis < 2,6 Gew.-% Kupfer und/oder 0,8 Gew.-% bis 1,2 Gew.-% Magnesium und/oder 0,4 Gew.-% bis 0,6 Gew.-% Eisen enthält. Mit Vorteil weist die erfindungsgemäße Aluminiumlegierung bzw. Aluminium-Gusslegierung ein Verhältnis aus Eisen und Mangan von 2:1 und bevorzugt zwischen 2:1 und 5:1 auf und/oder eine Summe der Gehalte von Eisen und Mangan, die 0,9 Gew.-% nicht überschreitet, auf.

Mit Vorteil wird die aufgefundene Aluminiumlegierung erfindungsgemäß mittels Schwerkraftkokillengussverfahren hergestellt bzw. verarbeitet.

Bevorzugt besteht ein erfindungsgemäßes Motorbauteil, insbesondere ein Kolben für einen Verbrennungsmotor, zumindest teilweise aus einer der vorgenannten erfindungsgemäßen Aluminiumlegierungen. Ein derartiges erfindungsgemäßes Motorbauteil weist eine hohe Warmfestigkeit auf. Bei einem erfindungsgemäß hergestellten Kolben liegt in dessen thermisch hoch belastetem Muldenrandbereich oder Bodenbereich zudem nur wenig primäres Silizium und Siliziumausscheidungen mit akzeptabler Größe vor, so dass die Legierung insbesondere zu einer sehr hohen Warmfestigkeit eines erfindungsgemäß hergestellten Kolbens führt.

Ein weiterer Aspekt der Erfindung liegt in der bevorzugten Verwendung der oben ausgeführten erfindungsgemäßen Aluminiumlegierung für die Herstellung eines Motorbauteils, insbesondere eines Kolbens eines Verbrennungsmotors.

## Patentansprüche

1. Aluminiumlegierung, insbesondere Aluminium-Gusslegierung, **dadurch gekennzeichnet, dass** die Aluminiumlegierung die folgenden Legierungselemente:
| | |
|---|---|
| Silizium: | 10 Gew.-% bis < 13 Gew.-%, |
| Nickel: | bis < 0,6 Gew.-%, |
| Kupfer: | 1,5 Gew.-% bis < 3,6 Gew.-%, |
| Magnesium: | 0,5 Gew.-% bis 1,5 Gew.-%, |
| Eisen: | 0,1 Gew.-% bis 0,7 Gew.-%, |
| Mangan: | 0,1 bis 0,4 Gew.-%, |
| Zirkonium: | > 0,1 bis < 0,3 Gew.-%, |
| Vanadium: | > 0,08 bis < 0,2 Gew.-%, |
| Titan: | 0,05 bis < 0,2 Gew.-%, |
| Phosphor: | 0,0025 bis 0,008 Gew.-%, |
und als Rest Aluminium und nicht zu vermeidende Verunreinigungen aufweist.

2. Aluminiumlegierung nach Anspruch 1, **dadurch gekennzeichnet, dass** diese 11,0 bis < 12,5 Gew.-% Silizium enthält.

3. Aluminiumlegierung nach einem der Ansprüche 1 bis 2, **dadurch gekennzeichnet, dass** diese 1,8 bis < 2,6 Gew.-% Kupfer enthält.

4. Aluminiumlegierung nach einem der Ansprüche 1 bis 3, **dadurch gekennzeichnet, dass** diese 0,8 Gew.-% bis 1,2 Gew.-% Magnesium enthält.

5. Aluminiumlegierung nach einem der Ansprüche 1 bis 4, **dadurch gekennzeichnet, dass** diese 0,4 Gew.-% bis 0,6 Gew.-% Eisen enthält.

6. Aluminiumlegierung nach einem der Ansprüche 1 bis 5, **dadurch gekennzeichnet, dass** das Verhältnis aus Eisen und Mangan 2:1 und bevorzugt zwischen 2:1 und 5:1 beträgt.

7. Aluminiumlegierung nach einem der Ansprüche 1 bis 6, **dadurch gekennzeichnet, dass** die Summe der Gehalte von Eisen und Mangan 0,9 Gew.-% nicht überschreitet.

8. Verfahren zur Herstellung eines Motorbauteils, insbesondere eines Kolbens für einen Verbrennungsmotor, **dadurch gekennzeichnet, dass** eine Aluminiumlegierung gemäß einem der Ansprüche 1 bis 7 im Schwerkraftkokillengussverfahren vergossen wird.

9. Motorbauteil, insbesondere Kolben für einen Verbrennungsmotor, **dadurch gekennzeichnet, dass** es zumindest teilweise aus einer Aluminiumlegierung gemäß einem der Ansprüche 1 bis 7 besteht.

10. Verwendung einer Aluminiumlegierung zur Herstellung eines Motorbauteils, insbesondere eines Kolbens für einen Verbrennungsmotor, **dadurch gekennzeichnet, dass** eine Aluminiumlegierung nach einem der Ansprüche 1 bis 7 verwendet wird.

## Claims

1. Aluminum alloy, in particular aluminum casting alloy, **characterised in that** the aluminum alloy contains the following alloying elements:
| | |
|---|---|
| Silicon: | 10 wt% to < 13 wt%, |
| Nickel: | up to < 0.6 wt%, |
| Copper: | 1.5 wt% to < 3.6 wt%, |
| Magnesium: | 0.5 wt% to 1.5 wt%, |
| Iron: | 0.1 wt% to 0.7 wt%, |
| Manganese: | 0.1 to 0.4 wt%, |
| Zirconium: | > 0.1 to < 0.3 wt%, |
| Vanadium: | > 0.08 to < 0.2 wt%, |
| Titanium: | 0.05 to < 0.2 wt%, |
| Phosphorus: | 0.0025 to 0.008 wt%, |
the rest consisting of aluminum and unavoidable impurities.

2. Aluminum alloy according to claim 1, **characterised in that** this contains 11.0 to < 12.5 wt% silicon.

3. Aluminum alloy according to one of the claims 1 to 2, **characterised in that** this contains 1.8 to < 2.6 wt% copper.

4. Aluminum alloy according to one of the claims 1 to 3, **characterised in that** this contains 0.8 wt% to 1.2 wt% magnesium.

5. Aluminum alloy according to one of the claims 1 to 4, **characterised in that** this contains 0.4 wt% to 0.6 wt% iron.

6. Aluminum alloy according to one of the claims 1 to 5, **characterised in that** the ratio of iron to manganese is 2:1 and preferably between 2:1 and 5:1.

7. Aluminum alloy according to one of the claims 1 to 6, **characterised in that** the sum of the contents of iron and manganese does not exceed 0.9 wt%.

8. Method for producing an engine component, in particular a piston for a combustion engine, **characterised in that** an aluminum alloy according to one of the claims 1 to 7 is cast using the gravity die casting process.

9. Engine component, in particular a piston for a combustion engine, **characterised in that** it consists at least partially of an aluminum alloy according to one of the claims 1 to 7.

10. Use of an aluminum alloy for the production of an engine component, in particular a piston for a combustion engine, **characterised in that** an aluminum alloy according to one of the claims 1 to 7 is used.

## Revendications

1. Alliage d'aluminium, en particulier une fonte d'aluminium, **caractérisé en ce que** l'alliage d'aluminium présente les éléments d'alliage suivants :
| | |
|---|---|
| Silicium: | de 10 % en poids à < 13 % en poids, |
| Nickel: | jusqu'à < 0,6 % en poids, |
| Cuivre : | de 1,5 % en poids à < 3,6 % en poids, |
| Magnésium : | de 0,5 % en poids à 1,5 % en poids, |
| Fer : | de 0,1 % en poids à 0,7 % en poids, |
| Manganèse : | de 0,1 % en poids à 0,4 % en poids, |
| Zirconium : | de > 0,1 à < 0,3 % en poids, |
| Vanadium : | de > 0,08 à < 0,2 % en poids, |
| Titane : | de 0,05 à < 0,2 % en poids, |
| Phosphore : | de 0,0025 à 0,008 % en poids, |
et le reste étant constitué par de l'aluminium et des impuretés inévitables.

2. Alliage d'aluminium selon la revendication 1, **caractérisé en ce qu'**il contient de 11,0 à < 12,5 % en poids de silicium.

3. Alliage d'aluminium selon l'une quelconque des revendications 1 à 2, **caractérisé en ce qu'**il contient de 1,8 à < 2,6 % en poids de cuivre.

4. Alliage d'aluminium selon l'une quelconque des revendications 1 à 3, **caractérisé en ce qu'**il contient de 0,8 % en poids à 1,2 % en poids de magnésium.

5. Alliage d'aluminium selon l'une quelconque des revendications 1 à 4, **caractérisé en ce qu'**il contient de 0,4 % en poids à 0,6 % en poids de fer.

6. Alliage d'aluminium selon l'une quelconque des revendications 1 à 5, **caractérisé en ce que** le rapport fer/manganèse est de 2:1, et de préférence compris entre 2:1 et 5:1.

7. Alliage d'aluminium selon l'une quelconque des revendications 1 à 6, **caractérisé en ce que** la somme des teneurs en fer et en manganèse n'excède pas 0,9 % en poids.

8. Procédé de fabrication d'une pièce de moteur, en particulier un piston d'un moteur à combustion interne, **caractérisé en ce qu'**un alliage d'aluminium selon l'une des revendications 1 à 7 est coulé par procédé de coulée en coquille par gravité.

9. Pièce de moteur, notamment piston pour un moteur à combustion interne, **caractérisée en ce qu'**elle est constituée au moins partiellement d'un alliage d'aluminium selon l'une quelconque des revendications 1 à 7.

10. Utilisation d'un alliage d'aluminium pour la réalisation d'une pièce de moteur, en particulier un piston pour un moteur à combustion interne, **caractérisée en ce qu'**un alliage d'aluminium est utilisé selon l'une quelconque des revendications 1 à 7.
